# EUROPEAN PATENT APPLICATION

(11) **EP 4 779 042 A1**
(43) Date of publication of application: **22.07.2026**
(21) Application number: 25765174.5
(22) Date of filing: 30.04.2025
(51) Int. Cl.: C22B 3/00, C22B 3/04, C22B 3/44

(54) **METHOD FOR RECOVERY OF NICKEL FROM NICKEL MATTE IN SULFIDE FORM**

(30) Priority: 30.08.2024 KR 20240117416; 05.03.2025 KR 20250028297
(71) Applicant: Korea Zinc Co., Ltd., Seoul 03159 (KR); Kemco, Seoul 03159 (KR)
(72) Inventor: CHOI, Heon Sik, Ulsan 44696 (KR); LEE, Je Joong, Seoul 06041 (KR)
(74) Representative: Angerhausen, Christoph
(86) International application number: PCT/KR2025/005899
(87) International publication number: WO 2026/049200

(57) **Abstract**

A method of recovering nickel from a nickel matte in the form of a sulfide includes pressure leaching the nickel matte at a pressure higher than atmospheric pressure; neutralizing a post-pressure leaching liquid produced in the pressure leaching; performing a first solvent extraction process of producing a post-first extraction liquid containing nickel from a post-neutralization liquid produced in the neutralizing; and performing a second solvent extraction process of producing a post-second extraction liquid containing nickel from the post-first extraction liquid.

## Description

### TECHNICAL FIELD

The present disclosure relates to a nickel recovery method, and more particularly, to a method of recovering nickel from a nickel matte in the form of a sulfide.

### BACKGROUND

Nickel (Ni) is an essential metal used in a variety of industries, particularly in the manufacture of electric vehicle batteries, stainless steel, and electronic devices. A nickel matte is a nickel raw material that exists in the form of a sulfide, and a demand for efficient processing technology to recover high-purity nickel continues to grow.

A representative method of recovering nickel from a nickel matte is an atmospheric leaching process using an acid solution. However, this atmospheric leaching process has limitations such as requiring long durations (e.g., 16 hours or longer) to increase leaching efficiency, resulting in low production efficiency. Moreover, the increased consumption of introduced gas or steam, along with the cost of hydrogen peroxide (H₂O₂) introduced as an oxidizing agent, reduces the economic feasibility of this method. To address these issues, active research is being conducted to develop a method of recovering nickel from a nickel matte.

### SUMMARY

The present disclosure provides a method of recovering nickel from a nickel matte in the form of a sulfide through a pressure leaching process and a solvent extraction process.

According to an aspect of the present disclosure, a method of recovering nickel from a nickel matte in the form of a sulfide includes pressure leaching the nickel matte at a pressure higher than atmospheric pressure, neutralizing a post-pressure leaching liquid produced in the pressure leaching, performing a first solvent extraction process of producing a post-first extraction liquid containing nickel from a post-neutralization liquid produced in the neutralizing, and performing a second solvent extraction process of producing a post-second extraction liquid containing nickel from the post-first extraction liquid.

According to an aspect of the present disclosure, the pressure leaching may include supplying oxygen at the pressure higher than atmospheric pressure, and the pressure higher than atmospheric pressure is 2 bar to 10 bar.

According to an aspect of the present disclosure, the pressure leaching may be performed at a temperature of 130 degrees C to 180 degrees C.

According to an aspect of the present disclosure, the pressure leaching may be performed for a duration of 3 to 10 hours.

According to an aspect of the present disclosure, a nickel-containing by-product may be produced in the first solvent extraction process or the second solvent extraction process, and the nickel-containing by-product may be recycled in the neutralizing.

According to an aspect of the present disclosure, a post-first extraction organic extractant may be further produced in the first solvent extraction process, and the method may further include recovering a first valuable metal from the post-first extraction organic extractant.

According to an aspect of the present disclosure, the first valuable metal may include at least one selected from the group of Cu, Mn, and Zn.

According to an aspect of the present disclosure, an organic phase may be obtained in the recovering the first valuable metal, and the organic phase may be recycled in the first solvent extraction process.

According to an aspect of the present disclosure, a post-second extraction organic extractant may be further produced in the second solvent extraction process, and the method may further include recovering a second valuable metal from the post-second extraction organic extractant.

According to an aspect of the present disclosure, the second valuable metal may include at least one selected from the group of Co and Mg.

According to an aspect of the present disclosure, the nickel matte subjected to the pressure leaching may be a first nickel matte, and in the neutralizing, a second nickel matte may be introduced and reacted with the post-pressure leaching liquid produced from the first nickel matte to produce the post-neutralization liquid and a post-neutralization residue.

According to an aspect of the present disclosure, the post-pressure leaching liquid may contain an acid, and the second nickel matte may be introduced in an amount of 2 to 10 equivalents relative to the acid in the post-pressure leaching liquid.

According to an aspect of the present disclosure, an additional acid may be further introduced in the neutralizing, and an amount of the additional acid introduced may be controlled such that an amount of the second nickel matte introduced is 2 to 5 equivalents relative to a total acid in the post-pressure leaching liquid and the additional acid.

According to an aspect of the present disclosure, the post-pressure leaching liquid and the post-neutralization liquid may contain an acid, an acid concentration of the post-pressure leaching liquid before the neutralizing may range from 20 g/L to 30 g/L, and an acid concentration of the post-neutralization liquid after the neutralizing may be lower than that of the post-pressure leaching liquid and may be 20 g/L or lower.

According to an aspect of the present disclosure, the method may further include pressure leaching the post-neutralization residue and another first nickel matte, and neutralizing a post-pressure leaching liquid produced in the pressure leaching of the another first nickel matte.

According to an aspect of the present disclosure, a method of recovering nickel from a nickel matte in a form of a sulfide may include neutralizing a post-pressure leaching liquid produced by pressure leaching a first nickel matte at a pressure higher than atmospheric pressure, performing a first solvent extraction process of producing a post-first extraction liquid containing nickel from a post-neutralization liquid produced in the neutralizing, and performing a second solvent extraction process of producing a post-second extraction liquid containing nickel from the post-first extraction liquid, wherein, in the neutralizing, a second nickel matte may be introduced and be reacted with the post-pressure leaching liquid produced from the first nickel matte to produce the post-neutralization liquid and a post-neutralization residue.

According to the present disclosure, it is possible to enhance the leaching rate of a nickel content from a nickel matte through a pressure leaching process. Further, it is possible to enhance the purity of the nickel content through a solvent extraction process. By recycling byproducts generated during this process within a nickel recovery process, overall production efficiency may be enhanced. Furthermore, after the solvent extraction process, valuable metals other than nickel may also be recovered from the nickel matte through a process of recovering valuable metals present in an organic extractant.

According to the present disclosure, by introducing the nickel matte in a neutralization process, the pressure leaching and neutralization processes may be efficiently repeated, ultimately maximizing the nickel leaching rate from the nickel matte.

### BRIEF DESCRIPTION OF THE DRAWINGS

FIG. 1 is a flowchart exemplarily illustrating a nickel recovery method according to one embodiment of the present disclosure.
FIG. 2 is a flowchart exemplarily illustrating a first solvent extraction process and a second solvent extraction process according to one embodiment of the present disclosure.
FIG. 3 is a flowchart exemplarily illustrating a nickel recovery method according to one embodiment of the present disclosure.

### DETAILED DESCRIPTION

In describing the present disclosure, detailed descriptions of related known functions, which are obvious to those skilled in the art, will be omitted if it is determined that they unnecessarily obscure the gist of the present disclosure.

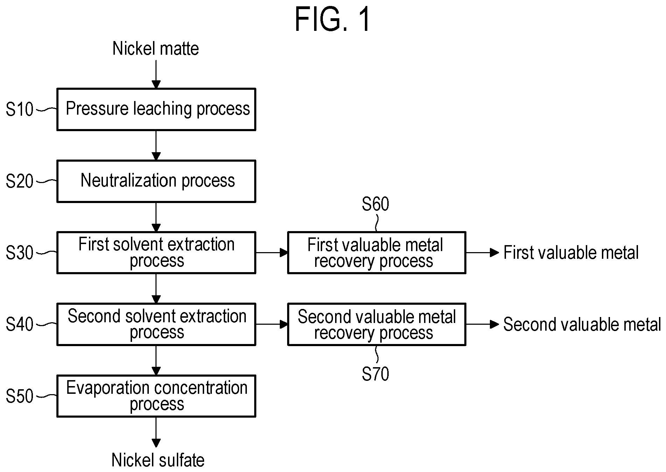

FIG. 1 is a flowchart exemplarily illustrating a nickel recovery method according to one embodiment of the present disclosure.

Referring to FIG. 1, a method of recovering nickel from a nickel matte in the form of a sulfide may include a pressure leaching process S 10, a neutralization process S20, a first solvent extraction process S30, a second solvent extraction process S40, and an evaporation concentration process S50. For example, the nickel recovery method may further include a first valuable metal recovery process S60 and a second valuable metal recovery process S70.

A nickel matte is an intermediate product made by smelting oxide and sulfide ores. The nickel matte may contain at least nickel, cobalt, copper, and iron. For example, the nickel matte may contain a nickel content of 70wt% or higher. The nickel content in the nickel matte may be higher than the content of other elements. For example, the nickel content may be contained in the form of a sulfide within the nickel matte. For example, the nickel content in the form of a sulfide contained in the nickel matte may include at least one selected from the group of Ni₃S₂, NiS, and Ni₃S₄. For example, the nickel content may be contained in the form of a nickel metal in the nickel matte. Additionally, some of the nickel content may be contained in the form of an oxide in the nickel matte.

The nickel matte may be in a crushed state. For example, the method of recovering nickel from the nickel matte in the form of a sulfide may further include a raw material crushing process before the pressure leaching process S10. A nickel matte raw material may be crushed in the raw material crushing process. The raw material crushing process may be performed in a wet or dry mill. For example, it may be performed in a mill such as a ball mill, rod mill, bead mill, or attrition mill. The raw material crushing process enhances the efficiency of the pressure leaching process for the nickel matte.

### Pressure Leaching Process S10

The pressure leaching process S10 may be performed on the nickel matte. The pressure leaching process S10 may be performed under a pressure higher than a normal pressure. The normal pressure may be atmospheric pressure and may be, for example, 0.1 MPa or 1.0 bar. The pressure leaching process S10 may be performed under a pressure of 2 bar to 10 bar, which is higher than atmospheric pressure. For example, the pressure leaching process S10 may include supplying an oxygen gas (O₂) at a pressure of 2 bar to 10 bar. When describing numerical ranges in this specification, the expression "A to B" is to be understood to include not only values between A and B but also the values A and B themselves. The oxygen gas may be used as an oxidizing agent.

The pressure leaching process S10 may be performed in a pressurized apparatus. For example, the pressurized apparatus may be an autoclave facility.

The pressure leaching process S10 may include supplying high-pressure oxygen after introducing the nickel matte into the pressurized apparatus along with an acid liquid. For example, the acid liquid may be a sulfuric acid solution. The acid liquid may be produced in the pressure leaching process S10, and may be reused in a subsequent pressure leaching process S10. This reduces the cost of acid introduced in the pressure leaching process S10.

The solid density of the nickel matte introduced into the pressure leaching process S10 may range from 100 g/L to 200 g/L. The solid density of the nickel matte is the ratio of the mass of the nickel matte to the volume of liquid within the pressurized apparatus where the pressure leaching process S10 is carried out. If the solid density of the nickel matte is less than 100 g/L, the operational efficiency relative to the amount of raw material introduced decreases, which may lead to an increase in process costs. If the solid density of the nickel matte is greater than 200 g/L, the efficiency of the leaching process may decrease and the mixing of liquid and solid may become difficult.

The pressure leaching process S10 may be performed at a temperature of 130 degrees C to 180 degrees C. If the pressure leaching process S10 is performed at a temperature lower than 130 degrees C, the leaching rate of nickel may decrease, leading to profit loss due to nickel loss. If the pressure leaching process S10 is performed at a temperature higher than 180 degrees C, the consumption of steam and electricity may increase, which may lead to an increase in process costs.

The pressure leaching process S10 may be performed for a duration of 3 to 10 hours. If the pressure leaching process S10 is performed for less than 3 hours, the nickel leaching rate may decrease, resulting in nickel loss. If the pressure leaching process S10 is performed for longer than 10 hours, the amount of oxygen and steam introduced may increase, which may lead to an increase in process costs.

In the pressurize leaching process S10, for example, if a sulfuric acid solution is used as the acid liquid, a nickel leaching reaction may be represented by [Reaction Formula 1] to [Reaction Formula 4] below.

[Reaction Formula 1] Ni₃S₂ + H₂SO₄ + 1/2O₂ → NiSO₄ + 2NiS + H₂O

[Reaction Formula 2] 4NiS + H₂SO₄ + 1/2O₂ → NiSO₄ + Ni₃S₄ + H₂O

[Reaction Formula 3] NiS + 2O₂ → NiSO₄

[Reaction Formula 4] Ni₃S₄ + H₂O + 15/2O₂ → 3NiSO₄ + H₂SO₄

Through [Reaction Formula 1] to [Reaction Formula 4], a nickel content in the nickel matte may be leached, and for example, may be leached in the form of a nickel sulfate.

NiS may be leached from the nickel matte by [Reaction Formula 1]. The NiS is a stable substance under atmospheric pressure. Therefore, if NiS reacts with a sulfuric acid solution under atmospheric pressure, the nickel content may not be leached. In the embodiment of the present disclosure, under a high pressure in the pressure leaching process S10, NiS may react with an oxygen gas and sulfuric acid solution according to [Reaction Formula 2] to [Reaction Formula 4] for leaching of the nickel content. In other words, since the nickel content in NiS is also leached, the leaching rate of the nickel content may further increase. Additionally, when performing the pressure leaching process S10, the leaching time may be shortened compared to an atmospheric leaching process, thereby enhancing production efficiency.

During the pressure leaching process S10, an iron content may be leached in the form of Fe²⁺ by the introduced oxygen. The iron content in the form of Fe²⁺ may be oxidized into the form of Fe³⁺ by oxygen. This may be represented by [Reaction Formula 5] and [Reaction Formula 6] below.

[Reaction Formula 5] FeS + H₂SO₄ +1/2O₂ → FeSO₄ + H₂O + S

[Reaction Formula 6] 2Fe²⁺ + 2H⁺ +1/2O₂ → 2Fe³⁺ + H₂O

Then, the iron content oxidized into the form of Fe³⁺ may be precipitated in the form of hematite (Fe₂O₃) according to [Reaction Formula 7] below.

[Reaction Formula 7] Fe₂(SO₄)₃ + 4H₂O → Fe₂O₃ + 3H₂SO₄ + H₂O

A post-pressure leaching liquid produced in the pressure leaching process S10 may contain an acid liquid. For example, the acid liquid may be the sulfuric acid solution produced in the pressure leaching process S10 (see [Reaction Formula 4] to [Reaction Formula 7] above). This allows for a reduction in the amount of sulfuric acid solution required for the pressure leaching process S10, and consequently, may lead to a decrease in process costs.

The acid concentration in the post-pressure leaching liquid produced in the pressure leaching process S10 may be controlled by the concentration of acid introduced into the pressure leaching process S10. The acid concentration in the post-pressure leaching liquid may be the concentration of the acid liquid (e.g., sulfuric acid solution) contained in the post-pressure leaching liquid. For example, the acid concentration in the post-pressure leaching liquid may range from 20 g/L to 30 g/L. If the acid concentration is maintained within a range from 20 g/L to 30 g/L, the nickel leaching rate may be 99% or more, and the iron removal rate through precipitation may be 90% or more. In addition, the amount of auxiliary material used for iron removal in the subsequent neutralization process S20 may decrease, which may consequently decrease the overall process procedures and costs.

For example, after the pressure leaching process S10, a repulping process may be further performed. In the repulping process, a pressure leach residue from the nickel matte after the pressure leaching process S10 may be stirred with water. The repulping process may be a process for recovering a water-soluble nickel content remaining in the pressure leach residue. By performing the repulping process, the amount of recovered nickel content may be maximized.

The repulping process may be carried out within a range of 1 to 2 hours. It is desirable that the repulping process may be carried out for 1 hour. If the repulping process is carried out for less than 1 hour, it may be difficult to dissolve all the nickel content. If the repulping process exceeds 2 hours, the process costs may increase.

As the repulping process is performed, a post-repulping liquid may be produced. The post-repulping liquid may contain the nickel content recovered from the pressure leach residue. For example, the post-repulping liquid may be reintroduced into the pressure leaching process S10. This allows for the maximization of nickel recovery from the nickel matte.

### Neutralization Process S20

The neutralization process S20 may be performed on the post-pressure leaching liquid produced from the pressure leaching process S10. In the neutralization process S20, the acid in the post-pressure leaching liquid may be neutralized, and the pH of the post-pressure leaching liquid may rise. During this process, impurities such as iron and aluminum contents in the post-pressure leaching liquid may be removed, and the remaining post-pressure leaching liquid is referred to as "post-neutralization liquid." For example, in the neutralization process S20, an iron content may be precipitated and removed in the form of goethite (FeOOH), and the iron content remaining in the post-neutralization liquid may be 1 mg/L or lower.

In the neutralization process S20, a neutralizing agent may be added to the post-pressure leaching liquid. The neutralizing agent in the neutralization process S20 may include at least one selected from the group of a sodium hydroxide (NaOH), calcium carbonate (CaCO₃), nickel matte, and nickel hydroxide (Ni(OH)₂). For example, a nickel hydroxide may be used as the neutralizing agent in the neutralization process S20, and the nickel hydroxide may be a nickel-containing byproduct formed from at least one selected from the group of the first solvent extraction process S30 and the second solvent extraction process S40, which are subsequent to the neutralization process S20. In other words, by reintroducing the nickel hydroxide produced during the nickel recovery process into the nickel recovery process, it is possible to avoid or reduce the introduction of additional neutralizing agents such as sodium hydroxide and calcium carbonate. As a result, the process costs may be reduced.

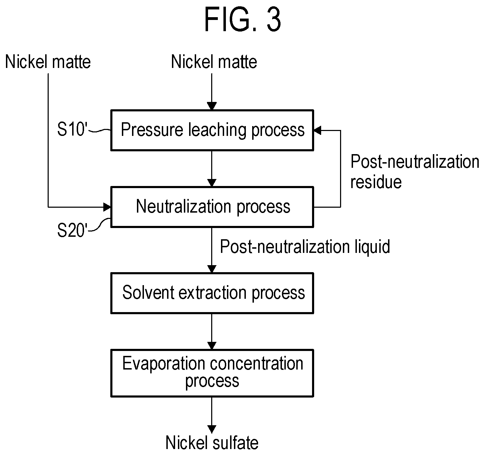

For example, the nickel matte may be introduced to the post-pressure leaching liquid in the neutralization process S20. This will be described later with reference to FIG. 3.

### First Solvent Extraction Process S30

The first solvent extraction process S30 may be performed on the post-neutralization liquid produced from the neutralization process S20. Through the first solvent extraction process S30, a post-first extraction organic extractant and a post-first extraction liquid may be produced from the post-neutralization liquid.

The post-first extraction organic extractant may contain a first valuable metal and a second valuable metal purified in the first solvent extraction process S30. For example, the first valuable metal and the second valuable metal contained in the post-first extraction organic extractant may be derived from the nickel matte through the processes described above. To recover the first valuable metal, the first valuable metal recovery process S60 to be described later may be performed on the post-first extraction organic extractant. The post-first extraction liquid may contain nickel and the second valuable metal. For example, the post-first extraction liquid may contain high-purity nickel compared to the post-neutralization liquid. For example, the first valuable metal may include at least one selected from the group of Cu, Mn, and Zn. For example, the second valuable metal may include at least one selected from the group of Co and Mg.

### Second Solvent Extraction Process S40

The second solvent extraction process S40 may be performed on the post-first extraction liquid. Through the second solvent extraction process S40, a post-second extraction organic extractant and a post-second extraction liquid may be produced from the post-first extraction liquid.

The post-second extraction organic extractant may contain the second valuable metal purified in the second solvent extraction process S40. To recover the second valuable metal, the second valuable metal recovery process S70 to be described later may be performed on the post-second extraction organic extractant. The post-second extraction liquid may contain nickel. For example, the post-second extraction liquid may contain high-purity nickel compared to the post-first extraction liquid.

### Evaporation Concentration Process S50

The evaporation concentration process S50 may be performed on the post-second extraction liquid. The post-second extraction liquid may contain a high-purity nickel content after undergoing the first solvent extraction process S30 and the second solvent extraction process S40, and for example, may contain a high-purity nickel sulfate. For example, through the evaporation concentration process S50, a high-purity nickel content (e.g., nickel sulfate) may be obtained in the form of a hydrate.

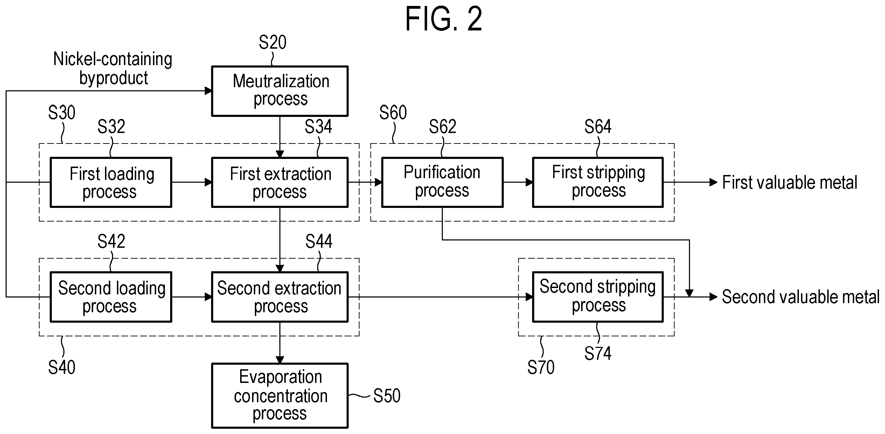

FIG. 2 is a flowchart exemplarily illustrating a first solvent extraction process and a second solvent extraction process according to one embodiment of the present disclosure.

Referring to FIG. 2, the first solvent extraction process S30 may include a first loading process S32 and a first extraction process S34. For example, the first extraction process S34 may be performed after performing the first loading process S32. The second solvent extraction process S40 may include a second loading process S42 and a second extraction process S44. For example, the second extraction process S44 may be performed after performing the second loading process S42.

Hereinafter, the first solvent extraction process S30 and the second solvent extraction process S40 will be described in more detail with reference to FIG. 2.

First, the first solvent extraction process S30 will be described in detail.

### First Loading Process S32

The first loading process S32 may be performed on a first organic extractant. In detail, the first loading process S32 is a process for loading nickel into the first organic extractant from a nickel-containing solution. Through the first loading process S32, nickel in the nickel-containing solution may be extracted into the first organic extractant, and thus, the first organic extractant after the first loading process S32 may contain nickel. The first organic extractant containing nickel after the first loading process S32 is referred to as "post-first loading organic extractant." The first extraction process S34 to be described later may be performed on the post-first loading organic extractant.

The first organic extractant may include at least one selected from the group of Di-2-Ethylhexyl Phosphoric Acid, Mono-2-ethylhexyl (2-Ethylhexyl)phosphonate, and Bis (2,4,4-TRIMETHYLPENTYL) Phosphinic Acid.

The nickel-containing solution after the completion of the first loading process S32 is referred to as "post-first loading liquid." The post-first loading liquid may contain a smaller amount of nickel compared to the nickel-containing solution before the first loading process S32.

Additional processes (e.g., a leaching process) may be performed on the post-first loading liquid to recover a nickel-containing byproduct from the post-first loading liquid. The nickel-containing byproduct may be recycled in the neutralization process S20. For example, the nickel-containing byproduct may include a nickel hydroxide, and the nickel hydroxide may be recycled as a neutralizing agent in the neutralization process S20.

In the first loading process S32, the pH of the aqueous phase (e.g., nickel-containing solution) may be controlled to a range from 4.0 to 5.2.

To control the pH, at least one selected from the group of a sodium hydroxide (NaOH), calcium carbonate (CaCO₃), and sodium carbonate (Na₂CO₃) may be introduced.

In the first loading process S32, the ratio of the organic phase (e.g., first organic extractant) to the aqueous phase may range from 3:1 to 8:1 by volume. If the ratio of the organic phase is lower than 3:1, the extraction rate of a nickel content may decrease, leading to reduced process efficiency. If the ratio of the organic phase is higher than 8:1, excessive use of the organic phase may increase the process costs.

### First Extraction Process S34

The first extraction process S34 may be performed on the post-first loading organic extractant. In the first extraction process S34, the post-neutralization liquid may be supplied to the post-first loading organic extractant.

In the first extraction process S34, the organic phase (e.g., post-first loading organic extractant) and the aqueous phase (e.g., post-neutralization liquid) may be mixed. At this time, a nickel content in the organic phase may be extracted into the aqueous phase, and a valuable metal content in the aqueous phase may be extracted into the organic phase. After the completion of the first extraction process S34, the aqueous phase containing a nickel content is referred to as "post-first extraction liquid," and the organic phase containing a valuable metal content is referred to as "post-first extraction organic extractant." The post-first extraction liquid may contain the nickel content and the second valuable metal. The post-first extraction organic extractant may contain impurities (e.g., first and second valuable metals).

In the first extraction process S34, the pH of the aqueous phase may be controlled to a range from 3.8 to 4.5. To control the pH, at least one selected from the group of a sodium hydroxide (NaOH), calcium carbonate (CaCO₃), and sodium carbonate (Na₂CO₃) may be introduced.

In the first extraction process S34, the ratio of the organic phase to the aqueous phase may range from 3:1 to 8:1 by volume. If the ratio of the organic phase is lower than 3:1, the extraction rate of the nickel content may decrease, leading to reduced process efficiency. If the ratio of the organic phase is higher than 8:1, excessive use of the organic phase may increase the process costs.

Thereafter, the second solvent extraction process S40 (e.g., second extraction process S44) may be performed on the post-first extraction liquid, and the first valuable metal recovery process S60 (e.g., purification process S62) may be performed on the post-first extraction organic extractant.

Then, the second solvent extraction process S40 will be described in detail.

### Second Loading Process S42

The second loading process S42 may be performed on a second organic extractant. In detail, the second loading process S42 is a process for loading nickel into the second organic extractant from a nickel-containing solution. Through the second loading process S42, nickel in the nickel-containing solution may be extracted into the second organic extractant, and thus, the second organic extractant after the second loading process S42 may contain nickel. The second organic extractant containing nickel after the second loading process S42 is referred to as "post-second loading organic extractant." The second extraction process S44 to be described later may be performed on the post-second loading organic extractant.

The second organic extractant may include at least one selected from the group of Di-2-Ethylhexyl Phosphoric Acid, Mono-2-ethylhexyl (2-Ethylhexyl)phosphonate, and Bis (2,4,4-TRIMETHYLPENTYL) Phosphinic Acid.

The nickel-containing solution after the completion of the second loading process S42 is referred to as "post-second loading liquid." The post-second loading liquid may contain a smaller amount of nickel compared to the nickel-containing solution before the second loading process S42.

Additional processes (e.g., a leaching process) may be performed on the post-second loading liquid to recover a nickel-containing byproduct from the post-second loading liquid. The nickel-containing by-product may be recycled in the neutralization process S20. For example, the nickel-containing byproduct may include a nickel hydroxide, and the nickel hydroxide may be recycled as a neutralizing agent in the neutralization process S20.

In the second loading process S42, the pH of the aqueous phase (e.g., nickel-containing solution) may be controlled to a range from 5.0 to 7.0. To control the pH, at least one selected from the group of a sodium hydroxide (NaOH), calcium carbonate (CaCO₃), and sodium carbonate (Na₂CO₃) may be introduced.

In the second loading process S42, the ratio of the organic phase (e.g., second organic extractant) to the aqueous phase may range from 3:1 to 8:1 by volume. If the ratio of the organic phase is lower than 3:1, the extraction rate of the nickel content may decrease, leading to reduced process efficiency. If the ratio of the organic phase is higher than 8:1, excessive use of the organic phase may increase the process costs.

### Second Extraction Process S44

The second extraction process S44 may be performed on the post-second loading organic extractant. In the second extraction process S44, the post-first extraction liquid may be supplied to the post-second loading organic extractant.

In the second extraction process S44, the organic phase (e.g., post-second loading organic extractant) and the aqueous phase (e.g., post-first extraction liquid) may be mixed. At this time, a nickel content in the organic phase may be extracted into the aqueous phase, and a valuable metal content in the aqueous phase may be extracted into the organic phase. After the completion of the second extraction process S44, the aqueous phase containing a nickel content is referred to as "post-second extraction liquid," and the organic phase containing a valuable metal content is referred to as "post-second extraction organic extractant." The post-second extraction liquid may contain the nickel content. The post-second extraction organic extractant may contain impurities (e.g., second valuable metal).

In the second extraction process S44, the pH of the aqueous phase may be controlled to a range from 4.5 to 5.5.

In the second extraction process S44, the ratio of the organic phase to the aqueous phase may range from 3:1 to 8:1 by volume. If the ratio of the organic phase is lower than 3:1, the extraction rate of the nickel content may decrease, leading to reduced process efficiency. If the ratio of the organic phase is higher than 8:1, excessive use of the organic phase may increase the process costs.

The evaporation concentration process S50 may be performed on the post-second extraction liquid, and the second valuable metal recovery process S70 (e.g., second stripping process S74) may be performed on the post-second extraction organic extractant.

Below, the first valuable metal recovery process S60 will be described with reference to FIG. 2.

The first valuable metal recovery process S60 may be performed on the post-first extraction organic extractant. The first valuable metal recovery process S60 may include a purification process S62 and a first stripping process S64. For example, during the first valuable metal recovery process S60, the purification process S62 and the first stripping process S64 may be performed sequentially.

### Purification Process S62

The purification process S62 may be performed on the post-first extraction organic extractant. An inorganic acid may be supplied to the post-first extraction organic extractant in the purification process S62. For example, the post-first extraction organic extractant and the inorganic acid may be mixed, and the second valuable metal contained in the post-first extraction organic extractant may be recovered using the inorganic acid. For example, the inorganic acid may include at least one selected from the group of sulfuric acid and hydrochloric acid.

After the completion of the purification process S62, the post-first extraction organic extractant, from which the second valuable metal has been removed, is referred to as "post-purification organic extractant," and the inorganic acid containing the second valuable metal is referred to as "post-purification liquid." The first stripping process S64 to be described later may be performed on the post-purification organic extractant. The post-purification organic extractant may contain the first valuable metal.

In the purification process S62, the pH of the aqueous phase (e.g., inorganic acid) may be controlled to a range from 1.5 to 3.5. For example, an additional acid may be further introduced to control the pH. By controlling the pH within this range, the second valuable metal may be recovered using the inorganic acid.

In the purification process S62, the ratio of the organic phase (e.g., post-first extraction organic extractant) to the aqueous phase may range from 3:1 to 8:1 by volume. If the ratio of the organic phase is lower than 3:1, the recovery rate of the second valuable metal may decrease, leading to reduced process efficiency. If the ratio of the organic phase is higher than 8:1, excessive use of the organic phase may increase the process costs.

### First Stripping Process S64

After the purification process S62, the first stripping process S64 may be performed on the post-purification organic extractant. In the first stripping process S64, an inorganic acid may be supplied to the post-purification organic extractant. For example, the post-purification organic extractant and the inorganic acid may be mixed, and the first valuable metal contained in the post-purification organic extractant may be recovered using the inorganic acid.

After the first stripping process S64, the post-purification organic extractant, from which the first valuable metal has been removed, is referred to as "first organic phase" and may be recycled in the first loading process S32. For example, the first organic phase may be recycled as the first organic extractant in the first loading process S32.

In the first stripping process S64, the pH of the aqueous phase (e.g., inorganic acid) may be controlled to a range from 1.0 to 2.0. For example, an additional acid may be further introduced to control the pH. By controlling the pH within this range, the first valuable metal may be recovered using the inorganic acid.

In the first stripping process S64, the ratio of the organic phase (e.g., post-purification organic extractant) to the aqueous phase may range from 3:1 to 8:1 by volume. If the ratio of the organic phase is lower than 3:1, the recovery rate of the first valuable metal may decrease, leading to reduced process efficiency. If the ratio of the organic phase is higher than 8:1, excessive use of the organic phase may increase the process costs.

After the first stripping process S64, the inorganic acid containing the first valuable metal is referred to as "post-first stripping liquid." A subsequent process may be performed on the post-first stripping liquid to recover the first valuable metal. For example, a first precipitation process may be performed on the post-first stripping liquid, and at least one selected from the group of a sodium sulfide (Na₂S), sodium hydrosulfide (NaSH), ammonium hydrogen sulfide (NH₄HS), and hydrogen sulfide (H₂S) may be used as a precipitating agent. Here, the precipitated first valuable metals may be separated from the liquid phase through solid-liquid separation, ultimately allowing the recovery of the first valuable metal.

Below, the second valuable metal recovery process S70 will be described with reference to FIG. 2.

The second valuable metal recovery process S70 may be performed on the post-second extraction organic extractant. The second valuable metal recovery process S70 may include a second stripping process S74.

### Second Stripping Process S74

The second stripping process S74 may be performed on the post-second extraction organic extractant. In the second stripping process S74, an inorganic acid may be supplied to the post-second extraction organic extractant. For example, the post-second extraction organic extractant and the inorganic acid may be mixed, and the second valuable metal contained in the post-second extraction organic extractant may be recovered using the inorganic acid.

After the completion of the second stripping process S74, the post-second extraction organic extractant, from which the second valuable metal has been removed, is referred to as "second organic phase" and may be recycled in the second loading process S42. For example, the second organic phase may be recycled as the second organic extractant in the second loading process S42.

In the second stripping process S74, the pH of the aqueous phase (e.g., inorganic acid) may be controlled to a range from 1.0 to 3.0. For example, an additional acid may be further introduced to control the pH. By controlling the pH within this range, the second valuable metal may be recovered using the inorganic acid.

In the second stripping process S74, the ratio of the organic phase (e.g., post-second extraction organic extractant) to the aqueous phase may range from 3:1 to 8:1 by volume. If the ratio of the organic phase is lower than 3:1, the recovery rate of the second valuable metal may decrease, leading to reduced process efficiency. If the ratio of the organic phase is higher than 8:1, excessive use of the organic phase may increase the process costs.

After the second stripping process S74, the inorganic acid containing the second valuable metal is referred to as "post-second stripping liquid." A subsequent process may be performed on the post-second stripping liquid to recover the second valuable metal. For example, the subsequent process may be performed along with the post-purification liquid containing the second valuable metal. For example, a second precipitation process may be performed on the post-second stripping liquid and the post-purification liquid, and at least one selected from the group of a sodium sulfide (Na₂S), sodium hydrosulfide (NaSH), ammonium hydrogen sulfide (NH₄HS), and hydrogen sulfide (H₂S) may be used as a precipitating agent.

Here, the precipitated second valuable metals may be separated from the liquid phase through solid-liquid separation, ultimately allowing the recovery of the second valuable metal.

Below, the procedure of performing the nickel recovery method according to the embodiment of the present disclosure and the results thereof will be described.

First, for Examples 1 to 7, a raw material used was a nickel matte containing 73.4wt% nickel (Ni), 0.49wt% cobalt (Co), 0.18wt% copper (Cu), and 3.61wt% iron (Fe). During the pressure leaching process, an autoclave facility was used, the solid density of the introduced raw material was set to 150 g/L, and the reaction was performed for 5 hours. The reaction temperature and pressure were controlled to 150 degrees C and 9.0 bar, respectively.

A sulfuric acid solution was used as an acid liquid. However, to vary the concentration of the acid liquid in the post-pressure leaching liquid for each example, the initial sulfuric acid concentration was controlled differently. The sulfuric acid concentration in the post-pressure leaching liquid, nickel leaching rate, and iron precipitation rate depending on the initial sulfuric acid concentration in Examples 1 to 7 are shown in Table 1 below.

**[Table 1]**

| | Initial Sulfuric Acid Concentration (g/L) | Sulfuric Acid Concentration in Post-Pressure Leaching Liquid (g/L) | Nickel Leaching Rate (%) | Iron Precipitation Rate (%) |
|---|---|---|---|---|
| Example 1 | 110 | 10 | 99.8 | 93.4 |
| Example 2 | 120 | 20 | 99.9 | 90.4 |
| Example 3 | 130 | 30 | 99.9 | 89.3 |
| Example 4 | 140 | 40 | 99.9 | 30.1 |
| Example 5 | 180 | 80 | 61.4 | 4.20 |
| Example 6 | 190 | 90 | 60.8 | 2.18 |
| Example 7 | 200 | 100 | 61.2 | 2.11 |

Referring to Table 1, in Examples 1 to 3 where the initial sulfuric acid concentration was controlled to achieve the sulfuric acid concentration in the post-pressure leaching liquid of 10 g/L to 30 g/L, the nickel leaching rate was 99% or more, and approximately 90% or more of the iron content leached during the pressure leaching of the nickel matte was precipitated. In Example 4 where the initial sulfuric acid concentration was controlled to achieve the sulfuric acid concentration in the post-pressure leaching liquid of 40 g/L, the nickel leaching rate reached an excellent 99%, but the iron precipitation rate was reduced to 30.1%. In addition, in Examples 5 to 7 where the initial sulfuric acid concentration was controlled to achieve the sulfuric acid concentration in the post-pressure leaching liquid of 80 g/L or higher, it was found that the nickel leaching rate was reduced to approximately 60% and the iron precipitation rate was also reduced to approximately 4%.

Through Examples 1 to 3 above, it is confirmed that performing the pressure leaching process allows effective leaching of a nickel content from a stable substance NiS according to [Reaction Formula 2] to [Reaction Formula 4]. However, in Examples 4 to 7 where the sulfuric acid concentration in the solution was excessively high, it is confirmed that [Reaction formula 2], where sulfuric acid acts as a reactant, predominates, leading to the formation of a large amount of Ni₃S₄, which is a product of [Reaction Formula 2], and consequently a reduction in the solubility of a nickel content.

Table 2 below shows the extraction rate of each content into the organic phase depending on the pH value in the first extraction process in Examples 8 to 10, after the completion of the first extraction process.

**[Table 2]**

| | pH | Ni (%) | Co (%) | Mg (%) | Mn (%) | Cu (%) | Zn (%) |
|---|---|---|---|---|---|---|---|
| Example 8 | 2.8-3.2 | 1-2 | 10-15 | 15-25 | 85-95 | 70-80 | 95-100 |
| Example 9 | 3.8-4.5 | 5-8 | 50-70 | 50-70 | 99-100 | 90-100 | 99-100 |
| Example 10 | 4.5-4.7 | 20-25 | 70-80 | 70-80 | 99-100 | 95-100 | 99-100 |

In Example 8, the extraction rates of Mn, Cu, Zn, Co, and Mg were lower compared to those in Examples 9 and 10, particularly with Co and Mg where a significant amount thereof was not extracted into the organic phase. However, the extraction rate of Ni was low at 1-2%, resulting in the aqueous phase containing a relatively large amount of nickel compared to other examples.

In Example 9, the pH was controlled to 3.8-4.5, most of Mn, Cu, and Zn were extracted into the organic phase, and more than half of Co and Mg were also extracted into the organic phase. In contrast, Ni was extracted in a smaller amount of 5-8% than other contents, which consequently allows for the production of a high-purity nickel solution.

In Example 10, while the extraction rates of Mn, Cu, Zn, Co, and Mg were high, Ni was also extracted in a large amount of 20-25%. In other words, a nickel solution produced in Example 10 was not suitable for producing a high-purity nickel solution due to a small amount of nickel leached.

Table 3 below shows the extraction rate of each content into the organic phase depending on the pH value in the second extraction process in Examples 11 and 12, after the completion of the second extraction process.

**[Table 3]**

| | pH | Ni (%) | Co (%) | Mg (%) | Mn (%) | Cu (%) | Zn (%) |
|---|---|---|---|---|---|---|---|
| Example 11 | 4.5-5.5 | 1-3 | 95-100 | 95-100 | 99-100 | 99-100 | 99-100 |
| Example 12 | 5.5-5.8 | 5-8 | 98-100 | 98-100 | 99-100 | 99-100 | 99-100 |

In Example 11, the pH was controlled to 4.5-5.5. It was confirmed that while the extraction rate of Ni was low, the extraction rates of other contents were high, and thus, most impurities could be removed.

In Example 12, the pH was controlled to 5.5-5.8. The extraction rate of Ni was higher compared to Example 11, and the extraction rates of other components were also higher compared to Example 11, allowing for the removal of most impurities.

FIG. 3 is a flowchart exemplarily illustrating a nickel recovery method according to one embodiment of the present disclosure.

Referring to FIG. 3, a leaching process and neutralization process are performed on a nickel matte. For example, a pressure leaching process S10' and a neutralization process S20' may be sequentially performed on the nickel matte. Except for differences that would be understood by a person skilled in the art, whether described below or not, the pressure leaching process S10' and the neutralization process S20' may be respectively similar to the pressure leaching process S10 and the neutralization process S20 described with reference to FIG. 1. For convenience, in describing the embodiment of FIG. 3, the nickel matte subjected to the pressure leaching process S10' and the neutralization process S20' is referred to as "first nickel matte."

The neutralization process S20' is performed on a post-pressure leaching liquid produced in the pressure leaching process S10', and a nickel matte is introduced as a neutralizing agent in the neutralization process S20'. For convenience, in describing the embodiment of FIG. 3, the nickel matte introduced in the neutralization process S20' without undergoing the pressure leaching process S10' is referred to as "second nickel matte." In the neutralization process S20', the second nickel matte may react with an acid liquid (e.g., sulfuric acid solution) contained in the post-pressure leaching liquid, thereby leaching a nickel content of the second nickel matte. For example, the nickel content of the second nickel matte may be leached according to the above-described [Reaction Formula 1] and [Reaction Formula 2].

The second nickel matte may neutralize the acid in the post-pressure leaching liquid. For example, in the neutralization process S20', the second nickel matte may be introduced in an amount of 2 to 10 equivalents relative to the acid in the post-pressure leaching liquid.

If the second nickel matte is introduced in too small an amount (e.g., less than 2 equivalents relative to the acid in the post-pressure leaching liquid), the amount of the second nickel matte introduced in a single neutralization process S20' may be excessively low, making it difficult to improve productivity. Conversely, if the second nickel matte is introduced in too large an amount (e.g., more than 10 equivalents relative to the acid in the post-pressure leaching liquid), the amount of unreacted and undissolved second nickel matte may increase, and the pH may rise excessively (e.g., exceeding 6.5), ultimately leading to a decrease in nickel recovery.

For example, an additional acid may be further introduced along with the second nickel matte in the neutralization process S20'. This may prevent the pH of the post-pressure leaching liquid from rising excessively and may maximize the amount of the second nickel matte that participates in the reaction. The amount of additional acid may be controlled so that the amount of the second nickel matte is 2 to 5 equivalents relative to the total acid in the post-pressure leaching liquid and the additional acid, thereby controlling the pH of the mixture liquid to a range from 4.5 to 5.0.

For example, the acid concentration of the post-pressure leaching liquid before the neutralization process S20' may range from 20 g/L to 30 g/L. Through the neutralization process S20', the acid concentration of the post-pressure leaching liquid may decrease. For example, the acid concentration of the post-pressure leaching liquid after the neutralization process S20' (e.g., a post-neutralization liquid to be described later) may be lower than the acid concentration of the post-pressure leaching liquid before the neutralization process S20' and may be 20 g/L or lower.

The post-pressure leaching liquid subjected to the neutralization process S20' may be separated into a liquid-phase post-neutralization liquid and a solid-phase post-neutralization residue. For example, both the post-neutralization liquid and the post-neutralization residue may contain nickel.

A subsequent solvent extraction process, such as the first solvent extraction process S30 and the second solvent extraction process S40 described with reference to FIG. 1, may be performed on the post-neutralization liquid. Thereafter, through an evaporation concentration process, a high-purity nickel content (e.g., nickel sulfate) may be obtained in the form of a hydrate. In addition, as the solvent extraction process is performed on the post-neutralization liquid, a valuable metal recovery process, such as the first valuable metal recovery process S60 and the second valuable metal recovery process S70 described with reference to FIG. 1 or FIG. 2, may also be performed.

The post-neutralization residue may be introduced into the pressure leaching process S10' along with a nickel matte (e.g., new first nickel matte), and in this process, nickel contained in the post-neutralization residue may be leached into the post-pressure leaching liquid along with nickel in the new first nickel matte. Subsequently, the post-pressure leaching liquid may undergo the neutralization process S20' by introducing a nickel matte (e.g., new second nickel matte), resulting in a new post-neutralization liquid and a new post-neutralization residue. The pressure leaching process S10' and the neutralization process S20' may then be performed again on the new post-neutralization residue, and these processes may be repeatedly executed.

If a substance other than the nickel matte is used as a neutralizing agent, contents derived from that substance may be contained in the post-neutralization residue. In such a case, to introduce the post-neutralization residue into the pressure leaching process S10', it may be necessary to newly set the process conditions of the pressure leaching process S10', or an additional pretreatment process may be required. However, in the present embodiment, since the nickel matte is used as the neutralizing agent, unnecessary substances in the post-neutralization residue may be minimized when performing the pressure leaching process S10'. Thus, the pressure leaching process S10' and the neutralization process S20' may be efficiently repeated. Ultimately, even the nickel remaining in the post-neutralization residue without being leached may be introduced into the pressure leaching process S10', thereby maximizing the nickel leaching rate from the nickel matte.

The present disclosure has been described in connection with certain embodiments in this specification, but it is to be understood that various modifications and alterations may be made without departing from the spirit and scope of the present disclosure as understood by those skilled in the art to which the present disclosure pertains. Furthermore, such modifications and alterations are to be considered as falling within the scope of the claims appended to this specification.

## Claims

1. A method of recovering nickel from a nickel matte in a form of a sulfide, the method comprising:
pressure leaching the nickel matte at a pressure higher than atmospheric pressure;
neutralizing a post-pressure leaching liquid produced in the pressure leaching;
performing a first solvent extraction process of producing a post-first extraction liquid containing nickel from a post-neutralization liquid produced in the neutralizing; and
performing a second solvent extraction process of producing a post-second extraction liquid containing nickel from the post-first extraction liquid.

2. The method of claim 1, wherein the pressure leaching includes supplying oxygen at the pressure higher than atmospheric pressure, and the pressure higher than atmospheric pressure is 2 bar to 10 bar.

3. The method of claim 1, wherein the pressure leaching is performed at a temperature of 130 degrees C to 180 degrees C.

4. The method of claim 1, wherein the pressure leaching is performed for a duration of 3 to 10 hours.

5. The method of claim 1, wherein a nickel-containing by-product is produced in the first solvent extraction process or the second solvent extraction process, and
wherein the nickel-containing by-product is recycled in the neutralizing.

6. The method of claim 1, wherein a post-first extraction organic extractant is further produced in the first solvent extraction process, and
wherein the method further comprises recovering a first valuable metal from the post-first extraction organic extractant.

7. The method of claim 6, wherein the first valuable metal includes at least one selected from the group of Cu, Mn, and Zn.

8. The method of claim 6, wherein an organic phase is obtained in the recovering the first valuable metal, and
wherein the organic phase is recycled in the first solvent extraction process.

9. The method of claim 1, wherein a post-second extraction organic extractant is further produced in the second solvent extraction process, and
wherein the method further comprises recovering a second valuable metal from the post-second extraction organic extractant.

10. The method of claim 9, wherein the second valuable metal includes at least one selected from the group of Co and Mg.

11. The method of claim 1, wherein the nickel matte subjected to the pressure leaching is a first nickel matte; and
wherein in the neutralizing, a second nickel matte is introduced and reacted with the post-pressure leaching liquid produced from the first nickel matte to produce the post-neutralization liquid and a post-neutralization residue.

12. The method of claim 11, wherein the post-pressure leaching liquid contains an acid, and
wherein the second nickel matte is introduced in an amount of 2 to 10 equivalents relative to the acid in the post-pressure leaching liquid.

13. The method of claim 12, wherein an additional acid is further introduced in the neutralizing, and
wherein an amount of the additional acid introduced is controlled such that an amount of the second nickel matte introduced is 2 to 5 equivalents relative to a total acid in the post-pressure leaching liquid and the additional acid.

14. The method of claim 11, wherein the post-pressure leaching liquid and the post-neutralization liquid contain an acid,
wherein an acid concentration of the post-pressure leaching liquid before the neutralizing ranges from 20 g/L to 30 g/L, and
wherein an acid concentration of the post-neutralization liquid after the neutralizing is lower than that of the post-pressure leaching liquid and is 20 g/L or lower.

15. The method of claim 11, further comprising:
pressure leaching the post-neutralization residue and another first nickel matte; and
neutralizing a post-pressure leaching liquid produced in the pressure leaching of the another first nickel matte.

16. A method of recovering nickel from a nickel matte in a form of a sulfide, the method comprising:
neutralizing a post-pressure leaching liquid produced in pressure leaching a first nickel matte at a pressure higher than atmospheric pressure;
performing a first solvent extraction process of producing a post-first extraction liquid containing nickel from a post-neutralization liquid produced in the neutralizing; and
performing a second solvent extraction process of producing a post-second extraction liquid containing nickel from the post-first extraction liquid,
wherein, in the neutralizing, a second nickel matte is introduced and reacted with the post-pressure leaching liquid produced from the first nickel matte to produce the post-neutralization liquid and a post-neutralization residue.

17. The method of claim 16, wherein the post-pressure leaching liquid contains an acid, and
wherein the second nickel matte is introduced in an amount of 2 to 10 equivalents relative to the acid in the post-pressure leaching liquid.

18. The method of claim 17, wherein an additional acid is further introduced in the neutralizing, and
wherein an amount of the additional acid introduced is controlled such that an amount of the second nickel matte introduced is 2 to 5 equivalents relative to a total acid in the post-pressure leaching liquid and the additional acid.

19. The method of claim 16, wherein the post-pressure leaching liquid and the post-neutralization liquid contain an acid,
wherein an acid concentration of the post-pressure leaching liquid before the neutralizing ranges from 20 g/L to 30 g/L, and
wherein an acid concentration of the post-neutralization liquid after the neutralizing is lower than that of the post-pressure leaching liquid and is 20 g/L or lower.

20. The method of claim 16, further comprising:
pressure leaching the post-neutralization residue and another first nickel matte; and
neutralizing a post-pressure leaching liquid produced in the pressure leaching of the another first nickel matte.
